## Europäisches Patentamt

## European Patent Office

## Office européen des brevets

(11) Veröffentlichungsnummer: **0 215 310**
**B1**

(12) # EUROPÄISCHE PATENTSCHRIFT

(45) Veröffentlichungstag der Patentschrift: **17.10.90**

(21) Anmeldenummer: **86111406.4**

(22) Anmeldetag: **18.08.86**

(51) Int. Cl.⁵: **D 21 G 1/02,** D 21 G 1/00, F 16 C 13/02

(54) **Vorrichtung zum Antrieb einer rohrförmigen Walze.**

(30) Priorität: **14.09.85 DE 3532843**

(43) Veröffentlichungstag der Anmeldung:
**25.03.87 Patentblatt 87/13**

(45) Bekanntmachung des Hinweises auf die Patenterteilung:
**17.10.90 Patentblatt 90/42**

(84) Benannte Vertragsstaaten:
**CH FR GB LI NL SE**

(56) Entgegenhaltungen:
**DE-A-1 461 221**
**DE-A-2 507 677**
**FR-A-2 313 141**
**FR-A-2 350 516**
**US-A-3 997 952**
**US-A-4 402 233**

(73) Patentinhaber: **Kleinewefers GmbH**
**Kleinewefersstrasse 25**
**D-4150 Krefeld 1 (DE)**

(72) Erfinder: **Junk, Dieter**
**Pappelweg 2**
**D-5910 Kreuztal (DE)**
Erfinder: **Rauf, Richard**
**Crön 10**
**D-4150 Krefeld (DE)**

(74) Vertreter: **Knoblauch, Ulrich, Dr.-Ing.**
**Kühhornshofweg 10**
**D-6000 Frankfurt am Main 1 (DE)**

Courier Press, Leamington Spa, England.

## Beschreibung

Die Erfindung bezieht sich auf eine Vorrichtung zum Antrieb einer rohrförmigen Walze, deren Walzenrohr von einem in Trägerlagern gehaltenen drehfesten Träger durchsetzt, auf diesem mittels einer Lagervorrichtung radial zum Träger in vertikaler Richtung bewegbar abgestützt ist, wobei ein in entsprechender Weise radial geführtes Lagerelement für ein drehfest mit dem Walzenrohr gekuppeltes, mit einem treibenen Zahnrad in Eingriff stehendes Antriebszahnrad vorgesehen ist.

Bei ner bekannten Antriebsvorrichtung dieser Art (DE-C-25 07 677) besteht die Lagervorrichtung aus einer Reihe von axial nebeneinander angeordneten hydrostatischen Stützelementen, die je durch einen Druckgeber belastet sind. Das Lagerelement ist um eine Achse schwenkbar, die gegenüber der Radialebene, in der die Achse des Walzenrohrs bewegbar ist, versetzt ist. Das treibende Zahnrad ist ständerfest und koaxial zur Schwenkachse gelagert. Das Antriebszahnrad ist starr mit dem Walzenrohr verbunden.

Mit Hilfe radial bewegbarer Walzenrohre, insbesondere wenn die einzelnen Stützelemente mit unterschiedlichem Druck ansteuerbar sind, also eine zonenweise Durchbiegungssteuerung möglich ist, läßt sich die Form des Walzenrohres in der Lastebene, in der zumeist auch die radiale Bewegung erfolgt, sehr genau einstellen. Beispielsweise läßt sich bei Kalandern für die Behandlung von Papier, Textilien, Kunststoff u. dgl. der Walzenspalt sehr genau den gewünschten Arbeitsbedingungen anpassen.

Ähnliche Vorteile ergeben sich für viele andere Anwendungszwecke, wie bei Blech-Walzwerken, Förderwalzen u. dgl. Überraschenderweise gelten diese Vorteile in vollem Umfang nur bei nichtangetriebenen Walzen, die also von einer Nachbarwalze, einem Förderband u. dgl. mitgenommen werden, nicht aber für angetriebene Walzen, die hier vorausgesetzt werden.

Aus FR-A-2 313 141 ist eine Walze bekannt, bei der die Walzenmantelenden fest auf einem Träger gelagert sind. Die Trägerenden sind ortsfest gehalten. Zylinder-Kolben-Anordnungen können zusätzliche Kräfte axial außerhalb oder axial innerhalb der festen Lager auf den Träger aufbringen, um diesen eine entsprechende Durchbiegung zu geben. Kräfte der Kolben-Zylinder-Anordnungen werden in Abhängigkeit von Fühlern festgelegt, die im Innern des Trägers den Flüssigkeitsdruck oder die Verformung des Trägers messen.

Der Erfindung liegt die Aufgabe zugrunde, eine Antriebsvorrichtung der eingangs beschriebenen Art anzugeben, die es erlaubt, die zugehörige Walze in ihrer Durchbiegung sehr genau einzustellen.

Diese Aufgabe wird erfindungsgemäß gelöst durch eine mittels einer Verstellvorrichtung höhenverstellbare Abstützung zur Aufnahme des Gewichts des Lagerelements und davon getragener weiterer Teile auf einem Widerlager (28), durch mindestens einen Sensor, der in Abhängigkeit von einer Vertikal-Verlagerung des Walzenrohrs Sensorsignale abgibt, und durch eine Regelvorrichtung, die in Abhängigkeit von den Sensorsignalen die Abstützung mit Hilfe der Verstellvorrichtung derart höhenverstellt, daß der Gewichtseinfluß des Lagerelements und der davon getragenen weiteren Teile auf das Walzenrohr weitgehend eliminiert ist.

Diese Konstruktion basiert auf der Überlegung, daß das in Vertikalrichtung wirkende Gewicht des Lagerelements einen Zwang auf das eine Ende des Walzenrohrs ausübt. Durch Verwendung der durch die Verstellvorrichtung nachgeführten Abstützung ist es möglich, diesen Gewichtseinfluß weitgehend zu eliminieren. Infolgedessen wirken sich alle Druckänderungen in dem dem Antrieb benachbarten Walzenabschnitt in gleicher Weise aus wie Druckänderungen am anderen Endabschnitt. Daher lassen sich ohne Schwierigkeiten symmetrische Biegelinien einstellen. Jede Druckänderung führt zu einer genau definierten Verformung des Walzenrohrs. Insgesamt ist eine Feineinstellung mit hoher Präzision möglich.

Mit Vorteil ist das Lagerelement in einer geraden Radialführung geführt und weist ein weiteres Lager für das treibene Zahnrad auf. Die gerade Radialführung ermöglicht es im Gegensatz zu einer Schwenklagerung, daß das Lagerelement der Radialbewegung des Walzenrohrs genau folgt. Allerdings muß dann das treibende Zahnrad ebenfalls in einem Lagerelement gelagert werden. Hierdurch erhöht sich das Gewicht dieses Lagerelements. Dies ist aber wegen der Abstützung durch das Verstellelement nicht schädlich. Außerdem ergibt sich eine erheblich verringerte Breite gegenüber einer Konstruktion mit seitlich angeordneter Schwenkachse.

Zweckmäßigerweise ist die Radialführung zu beiden Seiten des eines Trägerlagers vorgesehen. Dies ergibt einen besonders platzsparenden Aufbau.

Günstig ist es, wenn das Widerlager mit dem einen Trägerlager fest verbunden ist. Dies kann beispielsweise durch den Ständer geschehen. Auf diese Weise ist die Lage des Trägers und des Widerlagers durch eine gemeinsame Basis vorgegeben.

Es kommen die verschiedensten Verstellvorrichtungen in Betracht, beispielsweise ein Hydraulikzylinder, ein elektrischer Linearmotor oder ein Spindelhubelement mit Rotationsantrieb der Spindel.

Auch bezüglich des Sensors gibt es zahlreiche vorteilhafte Ausgestaltungen. Beispielsweise kann der Sensor die Radiallage des Walzenrohrs mit Bezug auf das Lagerelement feststellen. Dies ergibt eine sehr einfache Art der Nachführung.

Eine andere Möglichkeit besteht darin, daß der Sensor die Radiallage des Walzenrohrs mit Bezug auf den Träger oder einen damit radial fest verbundenen Teil feststellt. Hier kann man dem Walzenrohr und dem Lagerelement einen gemeinsamen Bezugspunkt zuordnen, von dem aus die Radialverschiebung ermittelt wird.

Insbesondere kann der Sensor an dem dem Lagerelement gegenüberliegenden Ende vorgesehen sein und mit einem stirnseitig vorstehenden Bauelement zusammenwirken, das an einem das Walzenrohrende lagernden Lagerring angebracht ist, der durch eine Drehmomentenstütze gegen Drehung gesichert ist. Da das gegenüberliegende Ende nicht durch Getriebeteile belegt ist, steht ausreichend Platz für die Sensorunterbringung zur Verfügung.

Der Sensor kann insbesondere ein Wegaufnehmer sein. Er kann auch durch eine Lichtschranke gebildet sein. Bei einer hydraulischen Ausführung kann der Sensor ein stössel-bestätigtes Steuerventil sein.

Eine andere Möglichkeit besteht darin, daß der Sensor ein Kraftaufnehmer ist, der in den Kraftübertragungsweg zwischen Walzenrohr und Lagerelement geschaltet ist. Wenn der Kraftaufnehmer den Wert Null mißt, ist sichergestellt, daß das Walzenrohr keinem Zwang durch das Gewicht des Lagerelements unterworfen ist.

Der Sensor kann auch ein Kraftaufnehmer sein, der in den Kraftübertragungsweg zwischen Lagerelement und Widerlager geschaltet ist. Wenn die Meßwerte von dem normalen Gewicht des Lagerelements abweichen, ist dies ein Zeichen dafür, daß eine Nachregelung erfolgen muß.

Mit besonderem Vorteil sind Antriebszahnrad und Walzenrohr über eine biegemomentfreie Kupplung miteinander drehfest gekuppelt, die eine begrenzte Parallelverschiebung der Teile zuläßt. Es kann sich beispielsweise um eine Doppelbogenzahnkupplung handeln. Durch eine solche Kupplung werden die Ansprüche an die Genauigkeit der Regelung ganz erheblich herabgesetzt. Die erstrebten Vorteile lassen sich auch unter sehr rauhen Arbeitsbedingungen erzielen.

Die Erfindung wird nachstehend anhand in der Zeichnung dargestellter, bevorzugter Ausführungsbeispiele näher erläutert. Es zeigen:

Fig. 1 eine schematische Seitenansicht einer Walze mit erfindungsgemäßem Antrieb,

Fig. 2 eine Draufsicht auf das Antriebsende der Walze der Fig. 1,

Fig. 3 einen Schnitt durch das Antriebsende der Walze der Fig. 1,

Fig. 4 eine abgewandelte Anordnung eines Sensors,

Fig. 5 eine abgewandelte Ausführungsform einer Verstellvorrichtung,

Fig. 6 eine weitere Abwandlung im Schnitt.

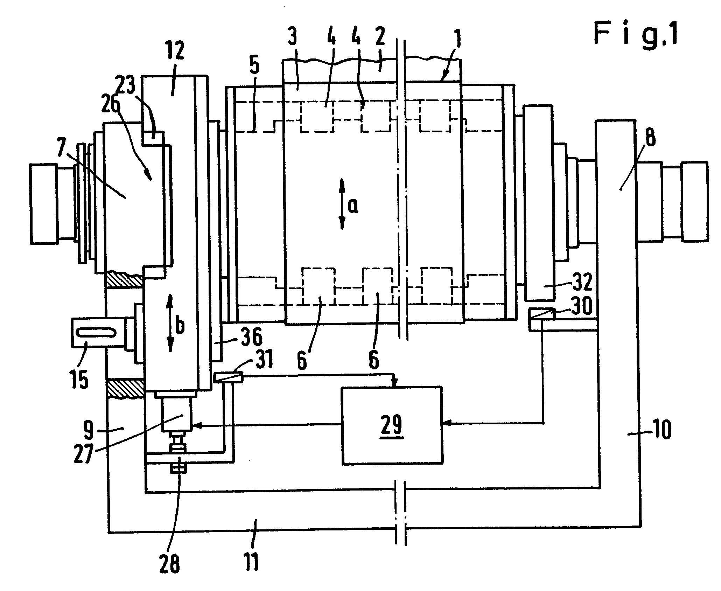

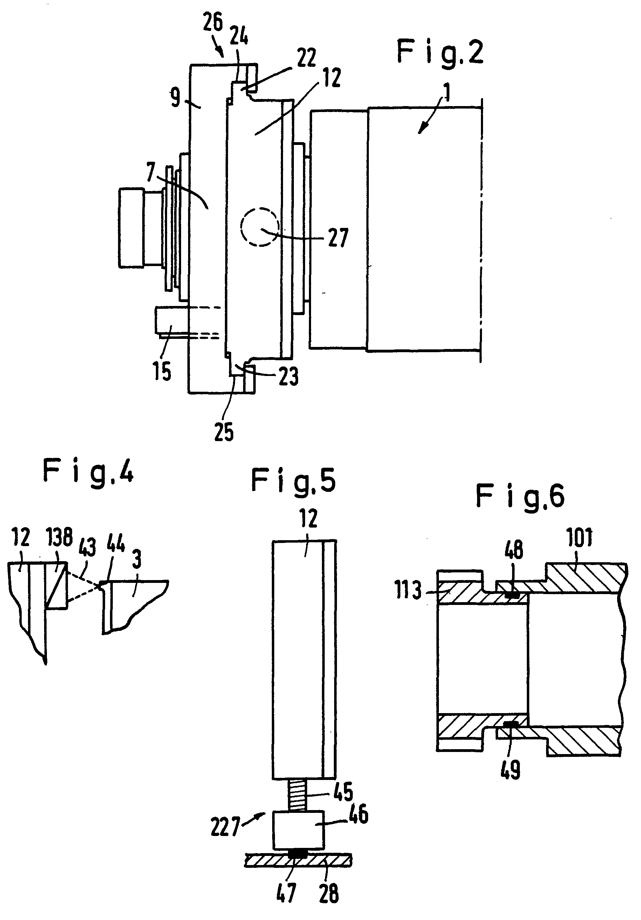

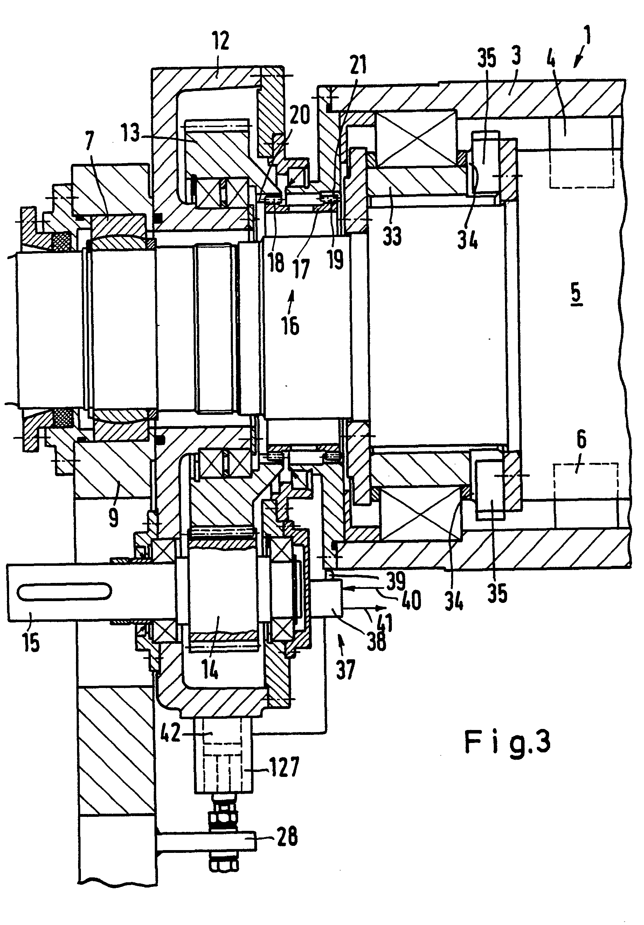

Die Fig. 1 bis 3 betreffen die gleiche Walze. Daher werden dieselben Bezugzeichen verwendet. Lediglich die Regelvorrichtung in Fig. 3 unterscheidet sich von derjenigen der Fig. 1 und 2.

Eine Walze 1 wirkt mit einer Gegenwalze 2 zur Bildung eines Walzenspaltes zusammen. Die Walze 1 besitzt ein Walzenrohr 3, das mit Hilfe von hydrostatischen Stützelementen 4 in Lastrichtung auf einem Träger 5 abgestützt ist. Zur Stabilisierung können auf der gegenüberliegenden Seite weitere hydrostatische Stützelemente 6 vorgesehen sein. Insbesondere handelt es sich bei den hydrostatischen Stützelementen um solche mit jeweils zwei in Umfangsrichtung versetzten Druckgebern, wie sie aus DE-OS 30 22 491 bekannt sind. Durch eine entsprechende Ansteuerung dieses Doppelkolben-Stützelementes ergibt sich eine radiale Verschiebung a des Walzenrohrs, ohne daß eine Querverlagerung auftritt.

Der Träger 5 durchsetzt das Walzenrohr 3 und ist mit seinen Enden in Trägerlagern 7, die sphärisch ausgebildet sind, drehfest gehalten. Die Trägerlager sind in Ständern 9 bzw. 10 angeordnet, welche durch ein Maschinenbett 11 miteinander verbunden sind.

Ein Lagerelement 12 dient zur Lagerung eines Antriebszahnrades 13, das von einem treibenden Zahnrad 14, welches ebenfalls im Lagerelement 12 gelagert ist, angetrieben wird. Der Schaft 15 dieses treibenden Zahnrades 14 wird zu diesem Zweck über eine Gelenkwelle mit einem Antriebsmotor verbunden. Eine Doppelbogenzahnkupplung 16 weist ein Kupplungselement 17 mit zwei Außenverzahnungen 18 und 19 auf. Die eine Außenverzahnung 18 kämmt mit einer Innenverzahnung 20 des Antriebszahnrads 13, die andere Außenverzahnung mit einer Innenverzahnung 21 an einer Stirnplatte des Walzenrohres 3. Eine solche Doppelbogenzahnkupplung 16 vermag ein Drehmoment zu übertragen, läßt aber eine Parallelversetzung zwischen Walzenrohr 3 und Antriebsrad 13 sowie eine Winkelversetzung zwischen diesen Teilen zu, ohne daß sich ein Biegemoment ergibt.

Eine Radialführung 26 für das Lagerelement 12 besitzt zwei an ihm angebrachte parallele Leisten 22 und 23, welche in entsprechende Nuten 24 und 25 greifen, die sich zu beiden Seiten des Trägerlagers 7 am Ständer 9 erstrecken. Längs dieser Radialführung ist das Lagerelement 12 mit Hilfe eines Verstellelementes 27 in Richtung des Pfeils b auf und ab verschiebbar. Dieses stützt sich an einem Widerlager 28 ab, das am Ständer 9 angebracht ist und daher mit dem Trägerlager 7 fest verbunden ist.

In dem Ausführungsbeispiel der Fig. 1 und 2 ist die Verstellvorrichtung 27 als elektrischer Linearmotor ausgebildet. Er wird von einer Regelvorrichtung 29 angesteuert, die von zwei Sensoren 30 und 31 beeinflußt ist, die beide an einem Ständer 9 bzw. 10 angebracht sind und daher eine feste Zuordnung zum Träger 5 haben. Der Sensor 30 ist ein induktiv arbeitender Wegaufnehmer, der den Abstand zum benachbarten Bauelement 32 ermittelt und ein entsprechendes Sensorsignal abgibt. Das Bauelement 32 steht stirnseitig über das Walzenrohr 3 vor und ist im Walzeninnern mit einem Lagerring fest verbunden, der dem Lagerring 33 am anderen Ende entspricht, sich mit dem Walzenrohr radial bewegt und durch in Nuten 34 eingreifende Drehmomentstützen 35 gegen Rotation gesichert ist. Das Bauelement 32 bewegt sich daher radial mit dem Walzenrohr und kennzeichnet somit die Radiallage des Walzenrohres 3. Der Sensor 31 stellt den Abstand gegenüber dem Bauelement 36 fest, das mit dem Lagerelement 12 verbunden ist. Die Regelvorrichtung 29 arbeitet derart, daß der Abstand zwischen dem Sensor 31 und dem Bauelement 36 dem Abstand zwischen dem Sensor 30 und dem Bauelement 32 nachgeführt wird. Bei dieser Regelung wirkt das Gewicht des Lagerelements 12 und der darin gehaltenen Teile nicht auf das Walzenrohr 3.

Bei der Ausführungsform der Fig. 3 ist das Verstellelement 127 als Hydraulikzylinder ausgebildet, dessen Kolben sich am Widerlager 28 abstützt. Als kombinierte Sensor und Regelvorrichtung 37 dient ein Steuerventil 38, das am Lagerelement 12 befestigt ist und dessen Stößel 39 am Umfang der Walze 1 anliegt. Das Ventil ist mit einer Druckzuleitung 40 und mit einer Abflußleitung 41 versehen. In einer Neutralstellung ist der Druckraum 42 des Hydrozylinders abgesperrt. Auf beiden Seiten der Neutralstellung gibt es eine erste und eine zweite Arbeitsstellung. In der ersten Arbeitsstellung ist der Druckraum 42 mit der Druckzuleitung 40 und in der zweiten Arbeitsstellung mit der Abflußleitung 41 verbunden. Infolgedessen wird das Lagerelement 12 immer in der gleichen Lage zum Walzenrohr 3 gehalten.

Bei der Ausführungsform der Fig. 4 ist ein optischer Sensor 138 vorgesehen, der einen Lichtstrahl 43 aussendet und nach Reflektion an der Stirnseite des Walzenrohres 3 wieder empfängt. Nur solange die Reflektionsfläche 44 getroffen wird, ist die korrekte Lage gegeben. Steigt das Lagerelement 12, wird die Reflektion zu Null; sinkt das Lagerelement 12, verringert sich der reflektierte Strahlungsanteil.

Bei der Ausführungsform der Fig. 5 weist die Verstellvorrichtung 227 für das Lagerelement 12 eine Spindel 45 auf, die mittels eines rotierenden Elektromotors 46 auf und ab bewegt werden kann. Zwischen diesen Motor und das Widerlager 28 ist der Sensor 47 in der Form eines Kraftaufnehmers gelegt. Die von ihm festgestellte Kraft muß gleich dem Gewicht des Lagerelements 12, der von ihm getragenen Teile und der Verstellvorrichtung sein. Weicht der Meßwert nach oben oder unten ab, muß die Verstellvorrichtung 227 entsprechend verstellt werden.

Bei der Ausführungsform nach Fig. 6 ist das Walzenrohr 101 drehfest, bespielsweise über eine Verzahnung, mit dem Antriebszahnrad 113 verbunden. Zwischengelegt sind jedoch Sensoren 48 und 49, welche feststellen, ob vom Antriebszahnrad 113 eine nach oben oder nach unten gerichtete Kraft auf das Walzenrohr 101 übertragen wird. Wenn beide Kraftaufnehmer den gleichen Wert anzeigen, ist die Walze unbeeinflußt vom Gewicht des Lagerelements 12.

Für die Synchronlaufregelung der Nachführung können auch andere Sensoren benutzt werden, beispielsweise potentiometrische Wegaufnehmer. Auch für die Verstellvorrichtung 27 kommen zahlreiche andere Möglichkeiten in Betracht, beispielsweise beheizbare Wachspatronen.

**Patentansprüche**

1. Vorrichtung zum Antrieb einer rohrförmigen Walze, deren Walzenrohr (3) von einem in Trägerlagern (7) gehaltenen drehfesten Träger (5) durchsetzt, auf diesem mittels einer Lagervorrichtung (4, 6) radial zum Träger in vertikaler Richtung bewegbar abgestützt ist, wobei ein in entsprechender Weise radial geführtes Lagerelement (12) für ein drehfest mit dem Walzenrohr (3) gekuppeltes, mit einem treibenden (14) Zahnrad in Eingriff stehendes Antriebszahnrad (13) vorgesehen ist, gekennzeichnet durch eine mittels einer Verstellvorrichtung (27; 127; 227) höhenverstellbare Abstützung zur Aufnahme des Gewichts des Lagerelements (12) und davon getragener weiterer Teile auf einem Widerlager (28), durch mindestens einen Sensor (30; 38; 138; 47; 48; 49), der in Abhängigkeit von einer Vertikal-Verlagerung des Walzenrohrs (3) Sensorsignale abgibt, und durch eine Regelvorrichtung (29; 37), die in Abhängigkeit von den Sensorsignalen die Abstützung mit Hilfe der Verstellvorrichtung derart höhenverstellt, daß der Gewichtseinfluß des Lagerelements und der davon getragenen weiterer Teile auf das Walzenrohr weitgehend eliminiert ist.

2. Vorrichtung nach Anspruch 1, dadurch gekennzeichnet, daß das Lagerelement (12) in einer geraden Radialführung (26) geführt ist und ein weiteres Lager für das treibende Zahnrad (14) aufweist.

3. Vorrichtung nach Anspruch 2, dadurch gekennzeichnet, daß die Radialführung (26) zu beiden Seiten des einen Trägers (7) vorgesehen ist.

4. Vorrichtung nach einem der Ansprüche 1 bis 3, dadurch gekennzeichnet, daß das Widerlager (28) mit dem einen Trägerlager (7) fest verbunden ist.

5. Vorrichtung nach einem der Ansprüche 1 bis 4, dadurch gekennzeichnet, daß die Verstellvorrichtung (127) ein Hydraulikzylinder ist.

6. Vorrichtung nach einem der Ansprüche 1 bis 4, dadurch gekennzeichnet, daß die Verstellvorrichtung (27) ein elektrischer Linearmotor ist.

7. Vorrichtung nach einem der Ansprüche 1 bis 4, dadurch gekennzeichnet, daß die Verstellvorrichtung (227) ein Spindelhubelement mit Rotationsantrieb der Spindel ist.

8. Vorrichtung nach einem der Ansprüche 1 bis 7, dadurch gekennzeichnet, daß der Sensor (38; 138) die Radiallage des Walzenrohrs (3) mit Bezug auf das Lagerelement (12) feststellt.

9. Vorrichtung nach einem der Ansprüche 1 bis 7, dadurch gekennzeichnet, daß der Sensor (30) die Radiallage des Walzenrohrs (3) mit Bezug auf den Träger (5) oder einen damit radial fest verbundenen Teil feststellt.

10. Vorrichtung nach Anspruch 9, dadurch gekennzeichnet, daß der Sensor (30) an der dem Lagerelement (12) gegenüberliegenden Ende der Walze (1) vorgesehen ist und mit einem stirnseitig vorstehenden Bauelement (32) zusammenwirkt, das an einem das Walzenrohrende lagernden Lagerring angebracht ist, der durch eine Drehmomentenstütze gegen Drehung gesichert ist.

11. Vorrichtung nach einem der Ansprüche 1 bis 10, dadurch gekennzeichnet, daß der Sensor (30) ein Wegaufnehmer ist.

12. Vorrichtung nach einem der Ansprüche 1 bis 11, dadurch gekennzeichnet, daß der Sensor (138) eine Lichtschranke ist.

13. Vorrichtung nach einem der Ansprüche 1 bis 11, dadurch gekennzeichnet, daß der Sensor (38) ein stössel-betätigtes Steuerventil ist.

14. Vorrichtung nach einem der Ansprüche 1 bis 7, dadurch gekennzeichnet, daß der Sensor (48, 49) ein Kraftaufnehmer ist, der in den Kraftübertragungsweg zwischen Walzenrohr (3) und Lagerelement (12) geschaltet ist.

15. Vorrichtung nach einem der Ansprüche 1 bis 7, dadurch gekennzeichnet, daß der Sensor (47) ein Kraftaufnehmer ist, der in den Kraftübertragungsweg zwischen Lagerelement (12) und Widerlager (28) geschaltet ist.

16. Vorrichtung nach einem der Ansprüche 1 bis 15, dadurch gekennzeichnet, daß Antriebszahnrad (13) und Walzenrohr (3) über eine biegemomentfreie Kupplung (16) miteinander drehfest gekuppelt sind, die eine begrenzte Parallelverschiebung der Teile zuläßt.

17. Vorrichtung nach Anspruch 16, dadurch gekennzeichnet, daß die biegemomentfreie Kupplung (16) eine Doppelbogenzahnkupplung ist.

**Revendications**

1. Dispositif destiné à l'entrainement d'un cylindre tubulaire, dont l'enveloppe tubulaire de cylindre (3) est traversée par un support de cylindre (5) fixe en rotation, maintenu dans des paliers-support (7), et qui s'appuie sur ce support en direction radiale, au moyen d'un système de palier (4, 6), en étant mobile en direction verticale, un élément de palier (12), guidé de manière correspondante en direction radiale, étant prévu pour une roue dentée d'entrainement (13) couplée en rotation avec l'enveloppe tubulaire de cylindre (3), et en prise avec une roue dentée menante (14), caractérisé par un appui s'effectuant sur une butée (28) et réglable en hauteur au moyen d'un dispositif de déplacement de réglage (27; 127; 227), pour compenser le poids de l'élément de palier (12) et d'autres pièces qu'il supporte, par au moins un détecteur (30; 38; 138; 47; 48, 49) qui délivre des signaux en fonction d'un déplacement vertical de l'enveloppe tubulaire de cylindre (3), et par un dispositif de régulation (29; 37) qui, en fonction des signaux du détecteur, règle l'appui en hauteur, à l'aide du dispositif de déplacement de réglage, de manière à éliminer dans une large mesure, l'influence du poids de l'élément de palier et des pièces qu'il supporte, sur l'enveloppe tubulaire du cylindre.

2. Dispositif selon la revendication 1, caractérisé en ce que l'élément de palier (12) est guidé dans un guidage rectiligne radial (26) et comporte un autre palier pour la roue dentée menante (14).

3. Dispositif selon la revendication 2, caractérisé en ce que le guidage radial (26) est prévu de part et d'autre de l'un des paliers-support (7).

4. Dispositif selon l'une des revendications 1 à 3, caractérisé en ce que la butée (28) est reliée de manière fixe à l'un des paliers-support (7).

5. Dispositif selon l'une des revendications 1 à 4, caractérisé en ce que le dispositif de déplacement de réglage (127) est constituè par un vérin hydraulique.

6. Dispositif selon l'une des revendications 1 à 4, caractérisé en ce que le dispositif de déplacement de réglage (27) est constitué par un moteur électrique linéaire.

7. Dispositif selon l'une des revendications 1 à 4, caractérisé en ce que le dispositif de déplacement de réglage (227) est constitué par un élément à vis de déplacement, avec entrainement en rotation de cette vis.

8. Dispositif selon l'une des revendications 1 à 7, caractérisé en ce que le détecteur (38; 138) détermine la position radiale de l'enveloppe tubulaire de cylindre (3), par rapport à l'élément de palier (12).

9. Dispositif selon l'une des revendications 1 à 7, caractérisé en ce que le détecteur (30) détermine la position radiale de l'enveloppe tubulaire de cylindre (3), par rapport au support de cylindre (5) ou à une pièce reliée à celui-ci de manière fixe en direction radiale.

10. Dispositif selon la revendication 9, caractérisé en ce que le détecteur (30) est prévu sur l'extrémité du cylindre (1), opposée à celle où se trouve l'élément de palier (12), et coopère avec un élément de construction (32) en saillie frontale, qui est agencé sur un anneau de palier assurant le montage de l'extrémité de l'enveloppe tubulaire de cylindre et bloqué en rotation au moyen d'une butée anti-couple.

11. Dispositif selon l'une des revendications 1 à 10, caractérisé en ce que le détecteur (30) est constitué par un capteur de déplacement.

12. Dispositif selon l'une des revendications 1 à 11, caractérisé en ce que le détecteur (138) est constitué par un système à barrière photo-électrique.

13. Dispositif selon l'une des revendications 1 à 11, caractérisé en ce que le détecteur (38) est constitué par une soupape de commande actionnée par un poussoir.

14. Dispositif selon l'une des revendications 1 à 7, caractérisé en ce que le détecteur (48, 49) est constitué par un capteur de force qui est monté dans le circuit de transmission des forces entre l'enveloppe tubulaire de cylindre (3) et l'élément de palier (12).

15. Dispositif selon l'une des revendications 1 à 7, caractérisé en ce que le détecteur (47) est constitué par un capteur de force, qui est monté dans le circuit de transmission des forces entre l'élément de palier (12) et la butée (28).

16. Dispositif selon l'une des revendications 1 à 15, caractérisé en ce que la roue dentée d'entrainement (13) et l'enveloppe tubulaire de cylindre (3) sont couplées en rotation au moyen d'un accouplement (16) libre de tout moment de flexion, qui autorise une translation parallèle, limitée, des pièces entre-elles.

17. Dispositif selon la revendication 16, caractérisée en ce que l'accouplement (16) libre de tout moment de flexion, est constitué par un accouplement à deux dentures hypoïdes jumelées.

## Claims

1. Device for driving a tubular roll, the roll tube (3) of which, penetrated by a supporting member (5) which is held in supporting bearings (7) and fixed in terms of rotation, is supported on the said supporting member by means of a bearing device (4, 6) so as to be movable radially with respect to the supporting member in the vertical direction, a bearing element (12) which is radially guided in a corresponding manner being provided for a drive gear (13) which is coupled to the roll tube (3) fixedly in terms of rotation and engages with a driving gear (14), characterized by a support, adjustable in height by means of an adjusting device (27; 127; 227), for taking the weight of the bearing element (12), and other parts carried by it, on an abutment (28), by at least one sensor (30; 38; 138; 47; 48; 49) which emits sensor signals as a function of a vertical shift of the roll tube (3), and by a regulating device (29; 37) which adjusts the height of the support with the aid of the adjusting device as a function of the sensor signals in such a way that the effect of the weight of the bearing element, and of the other parts carried by it, on the roll tube is largely eliminated.

2. Device according to Claim 1, characterized in that the bearing element (12) is guided in a straight radial guide (26) and has another bearing for the driving gear (14).

3. Device according to Claim 2, characterized in that the radial guide (26) is provided on both sides of one supporting member (7).

4. Device according to one of Claims 1 to 3, characterized in that the abutment (28) is firmly connected to one supporting bearing (7).

5. Device according to one of Claims 1 to 4, characterized in that the adjusting device (27) is a hydraulic cylinder.

6. Device according to one of Claims 1 to 4, characterized in that the adjussting device (27) is an electric linear motor.

7. Device according to one of Claims 1 to 4, characterized in that the adjusting device (227) is a spindle lifting element with rotary drive of the spindle.

8. Device according to one of Claims 1 to 7, characterized in that the sensor (38; 138) determines the radial position of the roll tube (3) with respect to the bearing element (12).

9. Device according to one of Claims 1 to 7, characterized in that the sensor (30) determines the radial position of the roll tube (3) with respect to the supporting member (5) or a part which is radially firmly connected thereto.

10. Device according to Claim 9, characterized in that the sensor (30) is provided at the end of the roll (1) opposite the bearing element (12) and cooperates with a component (32) which projects from the end face of the roll and is attached to a bearing ring which bears the end of the roll tube and is secured against rotation by a torque support.

11. Device according to one of Claims 1 to 10, characterized in that the sensor (30) is a displacement transducer.

12. Device according to one of Claims 1 to 11, characterized in that the sensor (138) is a light barrier.

13. Device according to one of Claims 1 to 11, characterized in that the sensor (38) is a tappet-acutated control valve.

14. Device according to one of Claims 1 to 7, characterized in that the sensor (48, 49) is a force transducer which is arranged in the force transmission path between roll tube (3) and bearing element (12).

15. Device according to one of Claims 1 to 7, characterized in that the sensor (47) is a force transducer which is arranged in the force transmission path between bearing element (12) and abutment (28).

16. Device according to one of Claims 1 to 15, characterized in that the drive gear (13) and roll tube (3) are coupled to one another fixedly in terms of rotation via a coupling (16) which is free from bending moment and permits a limited parallel displacement of the parts.

17. Device according to Claim 16, characterized in that the coupling (16) which is free from bending moment is a double curved teeth coupling.

Fig.1

Fig.2

Fig.4

Fig.5

Fig.6

Fig.3